## Europäisches Patentamt

## European Patent Office

## Office européen des brevets

(11) Publication number: **0 023 513**
**B1**

(12) **EUROPEAN PATENT SPECIFICATION**

(45) Date of publication of patent specification: **22.12.82**

(51) Int. Cl.³: **B 65 G 63/02, B 62 D 53/08**

(21) Application number: **80900382.5**

(22) Date of filing: **04.02.80**

(86) International application number:
**PCT/SE80/00035**

(87) International publication number:
**WO 80/01560 07.08.80 Gazette 80/18**

(54) TERMINAL TRACTOR DEVICE.

(30) Priority: **06.02.79 SE 7901018**

(43) Date of publication of application:
**11.02.81 Bulletin 81/6**

(45) Publication of the grant of the patent:
**22.12.82 Bulletin 82/51**

(84) Designated Contracting States:
**DE GB NL**

(56) References cited:
**DE - A - 2 119 420**
**FR - B - 1 521 553**
**US - A - 3 181 889**

(73) Proprietor: **AKTIEBOLAGET BYGG-OCH TRANSPORTEKONOMI (BT)**
**Box 331**
**S-595 00 Mjölby (SE)**

(72) Inventor: **SANDQVIST, Arne**
**Edelsbergsvägen 40B**
**S-821 00 Bollnäs (SE)**

(74) Representative: **Erixon, Bo**
**Kooperativa Förbundet (KF) Patent Department**
**Box 15200**
**S-104 65 Stockholm (SE)**

Courier Press, Leamington Spa, England.

Terminal tractor device

The present invention is an improvement of terminal tractors and similar vehicles, which by means of a so called fifth wheel support assembly can lift one end of and then tow trailers, that consequently only need wheels in their rear end.

In order to achieve a suitable distribution of the loads on the front and rear axle of the tractor and to be able to turn with different types of trailers it is necessary to locate the fifth wheel in the vicinity of the rear axle of the tractor. In order to ensure clearance between the front end of the trailer and for example thresholds and height differences between ship and quay it is necessary that the fifth wheel can lift this end to an elevated position. When trailers are towed uphill the point of action of the load is shifted backwards, which involves a risk of overturning of the tractor.

One object of the invention is to obviate the risk of overturning the tractor by means of a forwardly displaceable wheel support, through which the point of action of the load in for instance uphill driving can be moved so much forwards, that the stability of the tractor is ensured.

Another object of the invention is to regulate the position of the fifth wheel support so that there is a suitable distribution of the load on the front and the back axle of the tractor.

Tractors having fifth wheel supports that are displaceable on the tractor are known per se. FR—A—1 521 553 discloses for example a truck having a fifth wheel support, which is disposed on a lift arm. The lift arm is pivotally mounted on the chassis of the vehicle so that the fifth wheel support can be raised or lowered. Another example of trucks having displaceable fifth wheel supports is disclosed in DE—A—2 119 420. This truck is equipped with a fifth wheel support that is horizontally moveable forwards and backwards on the truck.

Even though the point of action of load with respect to the load on these trucks can be shifted, there is no provision for means to indicate the axle load in order to shift its point of action in response thereto.

The present invention, however, provides for a truck equipped with a fifth wheel support assembly and having front axle load sensing means indicating the axle load. The fifth wheel support is displaceably mounted on lift arms on the truck, whereby said support can be moved backwards and forwards in relation to the truck even when the lift arms are in their elevated position. The position of the fifth wheel support is regulated in response to the indicated axle load.

In a preferred embodiment of the invention the displacement of the fifth wheel is brought about by means of hydraulic cylinders, but it can of course also be effected by means of screws, gears, chains or equivalent devices. The displacement can e.g. be controlled from the driver's cab or automatically by means of a device, which senses the load or the axle pressure. This device can also be arranged so that it signals the driver or stops the tractor or in other ways prohibits further driving in an unstable condition, i.e. when the front axle pressure falls below a certain level, or when the front axle pressure is too high, i.e. when driving with a heavy load on level ground or downhill with the fifth wheel in its forward end position.

One embodiment of the invention is illustrated by the accompanying drawings in which:

Fig. 1 is a side view of a tractor,

Fig. 2 is a side view of the fifth wheel assembly,

Fig. 3 is a top view of the fifth wheel assembly,

Fig. 4 shows schematically the lift arms in their lower and upper end positions.

The tractor has front wheels 1 and rear wheels 2. Numeral 3 refers to the fifth wheel assembly, which carries the load, i.e. the trailer. The rear end position of the fifth wheel is shown in dash dotted lines, whereas the forward end position is shown in continuous lines. The lift arms 4 are pivoted at their left ends in the chassis and carry the fifth wheel 3 at their right ends, said ends also providing attachment for the hydraulic lift cylinders 5 that are attached to the chassis at their lower ends.

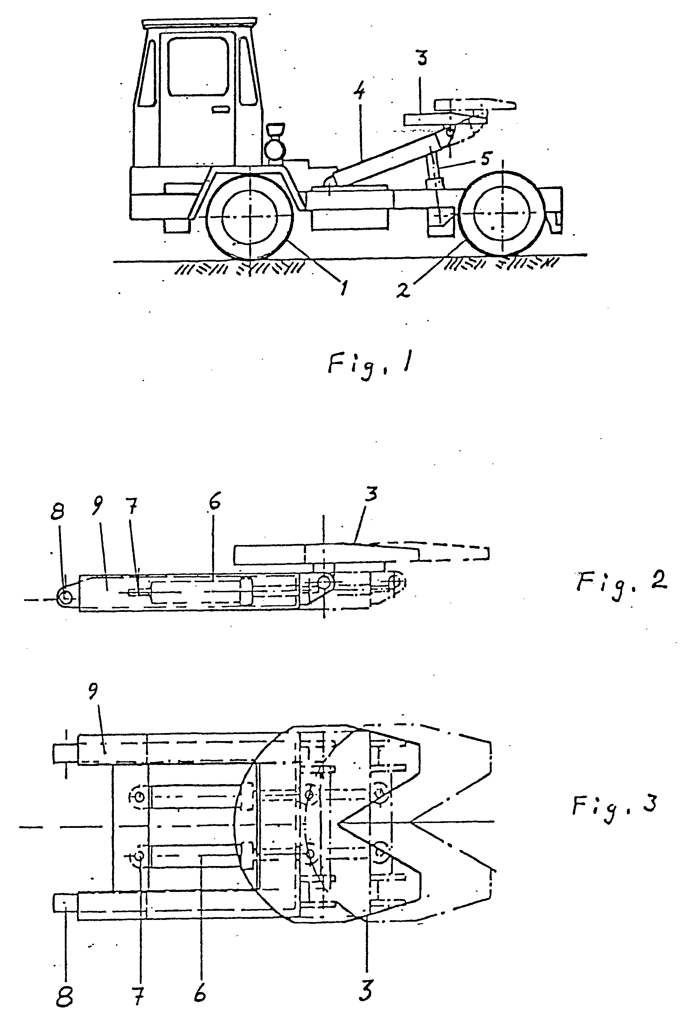

Figs. 2 and 3 show the fifth wheel 3 with its displacement cylinders 6. The whole unit 9 is disposed in the upper right part of the lift arms 4 and the fifth wheel 3 can be moved between its forward and rear end position by regulation of the oil supply to the cylinders. Numeral 7 indicates the points to which the cylinders 6 are attached on the displacement unit 9, which in turn is attached to the lift arms 4 at points indicated by numeral 8.

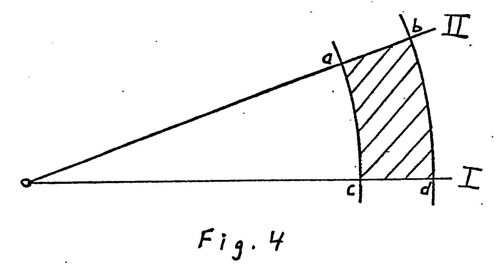

Fig. 4 shows schematically the lift arms in their lower and upper end positions I and II respectively, and the displacement cylinders 6 in their inner end positions a and c respectively, and furthermore in their outer end positions b and d respectively. The support point of the fifth wheel 3 can consequently be positioned arbitrarily within the area a, b, d, c, making possible a stable handling of the trailer at different loads and slopes.

Instead of the shown lift arms and lift cylinders the fifth wheel can of course be carried by other kinds of mechanisms.

## Claims

1. A coupling assembly for connecting a trailer to a terminal truck or a similar vehicle equipped with a fifth wheel support assembly (3), which is pivotally disposed on a lift arm (4), said lift arm (4) being vertically pivotally mounted on the chassis of the vehicle, characterized in that the fifth wheel assembly (3) is displaceably mounted on the lift arm (4) for forward and backward movement thereon in relation to the vehicle and in that front axle load sensing means are arranged to indicate the axle load for regulating the position of the fifth wheel assembly in response thereto.

2. A coupling assembly according to claim 1, characterized by an automatic control mechanism arranged to displace the fifth wheel assembly in response to the indicated axle load.

3. A coupling assembly according to any of the preceding claims, characterized in that a hydraulic lift device (5) is mounted between the chassis and the lift arm (4) for raising the lift arm.

4. A coupling assembly according to any of the preceding claims, characterized in that a hydraulic displacement device (6) is mounted on the lift arm (4) for displacing the fifth wheel assembly (3).

## Revendications

1. Dispositif d'attelage pour l'accouplement d'une remorque à un tracteur de manoeuvre ou véhicule similaire équipé d'une sellette (3) pivotante, montée sur un bras (4) pivotant à la verticale sur le châssis du véhicule, caractérisé par le fait que la sellette (3) peut avancer ou reculer sur le bras (4), c'est-à-dire par rapport au véhicule, et qu'un dispositif capteur de charge indique la charge sur l'essieu avant, cela pour permettre de modifier la position de la sellette en conséquence.

2. Dispositif d'attelage conforme à ce qui est dit en 1, caractérisé par un mécanisme de commande automatique ayant pour fonction de déplacer la sellette en fonction de la charge sur essieu indiquée.

3. Dispositif d'attelage conforme à ce qui est dit en 1 ou 2, caractérisé par un vérin hydraulique (5) monté entre le châssis et le bras (4) et ayant pour fonction de relever ces bras.

4. Dispositif d'attelage conforme à ce qui est dit en 1, 2 ou 3, caractérisé par un vérin hydraulique (6) monté sur le bras (4) et ayant pour fonction de déplacer la sellette (3).

## Patentansprüche

1. Kupplungseinrichtung für die Verbindung von Sattelanhängern mit Terminal-Sattelzugmaschinen oder ähnlichen Fahrzeugen, die mit einer Kupplungsplatte (3) versehen sind, wobei die Kupplungsplatte drehbar an einem Hubarm (4) befestigt ist, und dieser Hubarm (4) seinerseits vertikal drehbar mit dem Fahrgestell des Fahrzeugs verbunden ist, dadurch gekennzeichnet, dass die Kupplungsplatte (3) verschiebbar am Hubarm (4) angebracht ist, um auf dem Hubarm eine Vorwärts- und Rückwärtsbewegung im Verhaltnis zum Fahrzeug ausführen zu können, und dass eine Abtasteinrichtung für die Vorderachslast so angeordnet wird, dass die Vorderachslast zur entsprechenden Regulierung der Lage der Kupplungsplatte angezeigt wird.

2. Kupplungseinrichtung nach Patentanspruch 1, dadurch gekennzeichnet, dass ein automatischer Betätigungsmechanismus für die Verschiebung der Kupplungsplatte entsprechend der angezeigten Achslast angeordnet wird.

3. Kupplungseinrichtung nach einem der vorstehenden Patentansprüche, dadurch gekennzeichnet, dass eine hydraulische Hubvorrichtung (5) zwischen dem Fahrgestell und dem Hubarm (4) zum Heben des Hubarms eingesetzt ist.

4. Kupplungseinrichtung nach einem der vorstehenden Patentansprüche, dadurch gekennzeichnet, dass eine hydraulische Schiebvorrichtung (6) am Hubarm (4) zum Verschieben der Kupplungsplatte (3) angebaut ist.

Fig. 1

Fig. 2

Fig. 3

1

Fig. 4